# EUROPEAN PATENT SPECIFICATION

(11) **EP 1 662 835 B1**
(45) Date of publication and mention of the grant of the patent: **16.04.2008**
(21) Application number: 05002395.1
(22) Date of filing: 04.02.2005
(51) Int. Cl.: H04Q 7/38

(54) **Wireless communication apparatus and method for acknowledging received data**
Drahtlose Kommunikationseinrichtung und drahtloses Kommunikationsverfahren zur Datenempfangsquittierung
Dispositif et procédé de communication sans fil pour l'accusé de réception de données

(30) Priority: 30.11.2004 KR 2004099168
(43) Date of publication of application: 31.05.2006
(73) Proprietor: SAMSUNG ELECTRONICS CO., LTD., Suwon-si, Gyeonggi-do (KR)
(72) Inventor: Jang, Kyung-hun, Yeongtong-gu Suwon-si Gyeonggi-do (KR); Park, Jong-ae, Samsung Adv. Inst. of Technology, Yongin-si Gyeonggi-do (KR); Lee, Dong-jun, 551-28 Dogok 1-dong Gangnam-gu Seoul (KR); Chang, Jin-bong, Daejeon-si (KR); Kim, Young-soo, Gangnam-gu Seoul (KR)
(74) Representative: Grünecker, Kinkeldey, Stockmair & Schwanhäusser Anwaltssozietät

(56) References cited:
- EP-A- 0 986 212
- EP-A- 1 292 061
- KYUNGHUN JANG ET AL: "Fast Acknowledgement Method using Subcarrier Set" IEEE 802.16 BROADBAND WIRELESS ACCESS WORKING GROUP, 6 July 2001 (2001-07-06), XP002221430
- LANSFORD J ET AL: "THE DESIGN AND IMPLEMENTATION OF HOMERF: A RADIO FREQUENCY WIRELESS NETWORKING STANDARD FOR THE CONNECTED HOME" PROCEEDINGS OF THE IEEE, IEEE. NEW YORK, US, vol. 88, no. 10, October 2000 (2000-10), pages 1662-1676, XP011044432 ISSN: 0018-9219

## Description

The present invention relates to wireless data communications, and more particularly, to a wireless transmission frame used in wireless data communications such as Orthogonal Frequency Division Multiplex (OFDM), and a wireless data communication apparatus and method for performing communications using the wireless transmission frame.

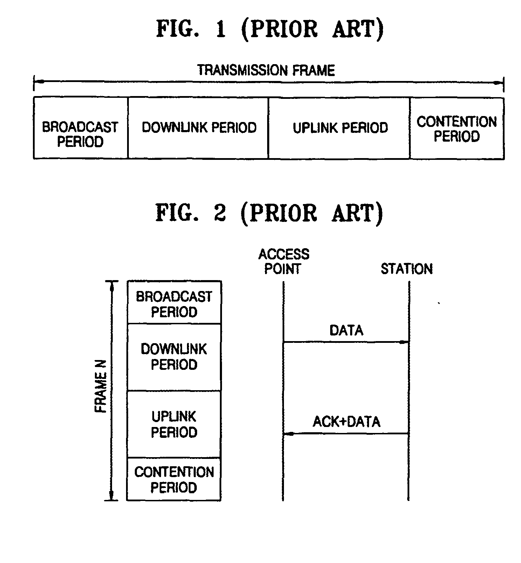

FIG. 1 is a diagram illustrating the structure of a conventional transmission frame, for use in wireless data communications, which includes a broadcast period, a downlink period, an uplink period, and a contention period. Referring to FIG. 1, an access point distributes and allocates uplink resources to each of stations connected to the access point, and each station transmits data to the access point using the allocated uplink resources. Also, the access point transmits data to each station via the downlink period.

Wireless data communications is still less reliable in transmitting data than wire data communications due to the characteristics of its wireless channel. Therefore, unlike the wire data communications, the wireless data communications requires a retransmission mechanism to improve the reliability of data transmission in a data link layer. The retransmission mechanism uses an acknowledgment (ACK) message or ACK timeout. Throughout this disclosure, the ACK message will be referred to as an ACK.

FIG. 2 is a diagram illustrating a conventional method of generating an ACK to be transmitted from a station to an access point. Referring to FIG. 2, the access point transmits data *DATA* to the station via a downlink period of a frame N. When the station satisfactorily receives the data *DATA* transmitted via the downlink period, it sends an ACK confirming receipt of the data *DATA* to the access point. At this time, when uplink resources has already been allocated to the station via a broadcast period of the frame N, the station transmits the ACK together with the data *DATA* to the access point, illustrated in FIG. 2.

However, since a data stream is asymmetrical in most cases, it is highly probable that the station would not be allocated with the uplink resources at the time when the station sends the ACK to the access point.

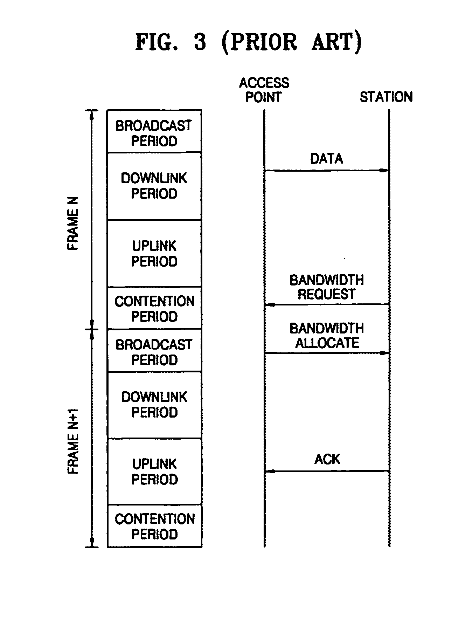

FIG. 3 is a diagram illustrating a conventional process of sending an ACK to an access point when uplink resources are not allocated to a station. Referring to FIG. 3, when the station is not allocated with the uplink resources in a frame *N*, the station requests, via a contention period of the frame *N*, the access point to allocate uplink resources, which will be used to transmit an ACK, in a next frame *N+1*. That is, the station sends a bandwidth request to the access point. When the access point allocates the uplink resources (i.e., bandwidth) to the station via a broadcast period of the frame *N+1*, the station sends an ACK to the access point via an uplink period of the frame *N+1*.

The access point resends data *DATA* to the station when the bandwidth request or the ACK, which is to be transmitted from the station to the access point, is lost during wireless interface or when the station does not successfully receive the data *DATA* since the data *DATA* is lost in transmission.

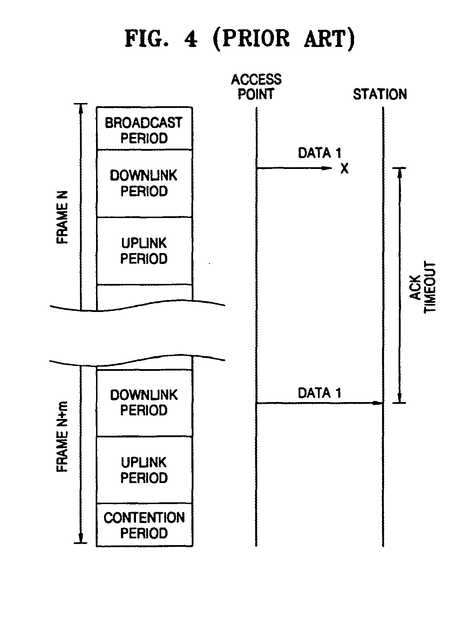

FIG. 4 is a diagram illustrating a conventional process of resending data *DATA* when the data *DATA* is lost during wireless interface. Referring to FIG. 4, when the data *DATA* is lost in a frame N in transmission from an access point to a station, the station cannot completely receive the data *DATA* and send an ACK to the access point. When the access point does not receive an ACK from the station within the ACK timeout, it considers that the station did not normally receive the data *DATA,* and resends the station the data *DATA* in a next frame *N+m.*

However, since the ACK timeout is a relatively long time, it will take time for the access point to notice a failure in transmission of the data *DATA.* That is, it is difficult to immediately resend the data *DATA.* For this reason, some research papers suggested not to use the retransmission mechanism for real-time data service, or to set the ACK timeout to be short, but this is insufficient to completely solve the above problem.

When a station receiving services from an access point goes out of a service area in which the access point can provide the services, it is impossible to exchange data between the station and the access point. This incident also occurs when supply of power to the station is stopped due to a limited battery capacity of the station. In general, in case that a station deviates from a service area or is turned off, the station does not inform an access point of this case. Therefore, the access point may allocate transmission resources to the station, thereby causing unnecessary consumption of resources. In other words, when the access point transmits data to the station, which is out of the service area, via a downlink period, the access station cannot receive an ACK from the station and thus continuously resends the data to the station.

To solve this problem, various methods have been introduced. For instance, the access point allocates a dedicated control channel to each of stations; periodically receives, from each station, a message regarding whether each station is connected to the access point; and periodically determines whether each station is out of the service area. However, the allocation of the dedicated control channel to each of the stations causes unnecessary consumption of resources. Also, to solve this problem, the access point periodically checks whether a particular station intends to transmit data and whether the station sends an ACK to the access point within the ACK timeout. However, this method also causes unnecessary consumption of resources during the ACK timeout since the ACK timeout is a relative long time.

K. Jang et al: "Fast Acknowledgment Method using Subcarrier Set," IEEE 802.16 Broadband Wireless Access Working Group; 6 July 2001, IEEE 802.16 abc- D1/10 discloses a wireless transmission frame structure having acknowledgement period. The wireless transmission frame structure is capable of minimizing a time spent for a network access point to check if a station has received the data. The access point using the wireless transmission frame structure can send data to each station and check whether the data is completely transmitted to each station in the same frame, thereby effectively performing real-time data service. Additionally, the allocation of a plurality of unique subcarrier channels to each station minimizes the resending of data because receipt of data is confirmed when at least one of the allocated subcarrier channels is activated, even if a part of the subcarrier channels are lost in a wireless interface.

It is the object of the present invention to provide a wireless data communication apparatus for performing wireless data communications while allowing an access point to determine whether a station receives data transmitted from the access point, and to check the status of the station, i.e., whether the station can receive data transmitted from the access point, thereby effectively using resources.

This object is solved by the subject matter of the independent claims.

Preferred embodiments are defined in the dependent claims.

According to an aspect of the present invention, there is also provided a wireless data communication method for performing wireless data communications while allowing an access point to determine whether a station receive data transmitted from the access point, and to check the status of the station, i.e., whether the station can receive data transmitted from the access point, thereby effectively using resources.

According to another aspect of the present invention, there is provided a wireless data communication apparatus which performs wireless data communications between an access point and at least one station. The wireless data communications is performed using a wireless transmission frame which includes an uplink period, a contention period, a receipt confirmation period, and a receiving state period. The receipt confirmation period is a period where a subcarrier channel set is activated when the station successfully receives data from the access point, and the receiving state period is a period where the subcarrier channel set is activated when the station can successfully receive data to be transmitted again from the access point.

According to another aspect of the present invention, there is provided a wireless data communication apparatus which performs wireless data communications using a wireless transmission frame which includes an uplink period, a contention period, a receipt confirmation period, and a receiving state period, the wireless data communication apparatus including an access point, the at least one station. The access point allocates a subcarrier channel set and transmits data to a station which requests access to the access point via a network outside, the subcarrier channel set being used in the receipt confirmation period and the receiving state period. The at least one station requests access to the access point via the network and is allocated with the subcarrier channel set from the access point; determines whether the subcarrier channel set will be activated in the receipt confirmation period according as whether the station successfully receives the data transmitted from the access point; and determines whether the subcarrier channel set will be activated in the receiving state period according as whether the station ca receive data to be transmitted again from the access point when the station successfully receives the data. The access point transmits new data in a next frame to the station or retransmits the data, which has been previously transmitted, according as whether the subcarrier channel set is activated.

According to yet another aspect of the present invention, there is provided a wireless data communication method performed between an access point and at least one station using a wireless transmission frame which includes a downlink period, an uplink period, a receipt confirmation period, a receiving state period, and a contention period, the wireless data communication method comprising (a) the access point allocating a subcarrier channel set to a station which request access to the access point via a network, and transmitting wireless data to stations accessing the access point in the downlink period, the subcarrier channel set being used in the receipt confirmation period and the receiving state period; (b) a station, which does not successfully receive the transmitted data, maintaining deactivating the subcarrier channel set allocated in (a) in the receipt confirmation period; (c) the station, which does not successfully receive the transmitted data, determining whether the station is to successfully receive data to be transmitted again from the access point; and (d) a station, which is determined to successfully receive the data to be transmitted again from the access point, activating the subcarrier channel set in the receiving state period; and (e)the access point determining whether the subcarrier channel set is activated in the receipt confirmation period and the receiving state period.

The above and other aspects and advantages of the present invention will become more apparent by describing in detail exemplary embodiments thereof with reference to the attached drawings in which:
FIG. 1 is a diagram illustrating the structure of a conventional transmission frame for use in wireless data communications;
FIG. 2 is a diagram illustrating a conventional method of generating an ACK to be transmitted from a station to an access point;
FIG. 3 is a diagram illustrating a conventional process of sending an ACK to an access point when uplink resources are not allocated to a station;
FIG. 4 is a diagram illustrating a conventional process of resending data when the data is lost during wireless interface;
FIG. 5 is a diagram illustrating the structure of a wireless transmission frame according to an embodiment of the present invention;
FIG. 6 is a schematic block diagram of a wireless data communication apparatus that performs wireless data communications using the wireless transmission frame of FIG. 5, according to an embodiment of the present invention;
FIG. 7 is a flowchart illustrating a wireless data communication method according to an embodiment of the present invention; and
FIG. 8 is a diagram illustrating a process of sending data to stations according to an embodiment of the present invention, performed by the wireless data communication method of FIG. 7.

Hereinafter, the structure and operation of a wireless data communication apparatus and a wireless data communication method performed in the apparatus of the present invention will now be described with reference to the accompanying drawings.

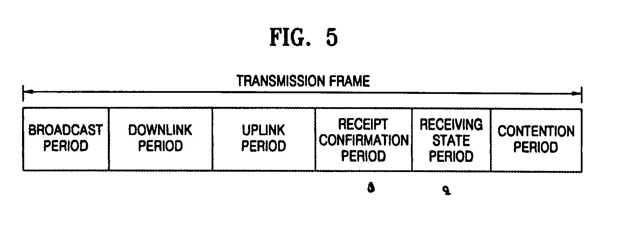

FIG. 5 illustrates the structure of a wireless transmission frame according to an embodiment of the present invention. Referring to the wireless transmission frame includes a broadcast period, a downlink period, an uplink period, a receipt confirmation period, a receiving state period, and a contention period.

Referring to FIG. 5, the receipt confirmation period and the receiving state period are present between the uplink period and the contention period of the wireless transmission frame. Here, the receipt confirmation period means the period during which a subcarrier channel set is activated when a station (not shown) satisfactorily receives data transmitted from an access point (not shown). The receiving state period means the period during which the subcarrier channel set is activated when a station can receive data to be retransmitted from the access point. In general, an Orthogonal Frequency Division Multiplex (OFDM) mode has a plurality of subcarrier channels in a carrier wave. For instance, a Wireless Local Area Network (WLAN) includes 52 subcarrier channels, and a Broadband Wireless Access (BWA) includes 512 or 1024 subcarrier channels. For that, the access point allocates a subcarrier channel set to each of stations, and the subcarrier channel set allocated to each station can be used in the receipt confirmation period and the receiving state period.

The access point can determine whether the station receives data from the access point by checking whether the subcarrier channel set is activated in the receipt confirmation period, in the same as the frame through which the access point transmitted the data to the station. Also, the access point can also determine whether the station can receive the data to be retransmitted from the access point by checking whether the subcarrier channel set is activated in the receiving state period, in the same as the frame through which the access point transmitted the data to the station. In other words, the station can indirectly present the reason(s) why it cannot receive the data transmitted from the access point by deactivating or activating the subcarrier channel set in the receiving state period. The receipt confirmation period and the receiving state period have at least two symbols. One of the two symbols may be used in the receipt confirmation period, and the other symbol may be used in the receiving state period, in case that the receipt confirmation period and the receiving state period have two symbols.

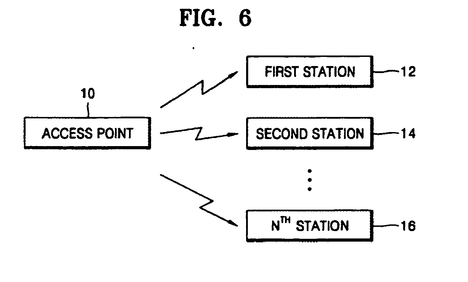

FIG. 6 is a schematic block diagram of a wireless data communication apparatus that performs wireless data communications using the wireless transmission frame of FIG. 5. Referring to FIG. 6, the wireless data communication apparatus includes an access point 10 and first through n^{th} stations 12 through 16 (n is a positive integer equal to or more than 1).

Referring to FIGS. 5 and 6, when the access point 10 receives a network access request from a station, the access point 10 allocates a subcarrier channel set to the station, the subcarrier channel set being used in a receipt confirmation period and a receiving state period. The access point 10 preferably allocates the subcarrier channel set to a station that requests real-time data services.

After the allocation of the subcarrier channel set to the station requesting the network access, the access point 10 transmits, via a downlink period, wireless data to the station connected to the access point 10 via the network among the first through n^{th} stations 12 through 16.

When each of the first through n^{th} stations 12 through 16 accesses the access point 10, the access point 10 allocates a subcarrier channel set to each station. In case of successfully receiving data transmitted from the access point 10 in the downlink period, each of the first through n^{th} stations 12 through 16 activates the allocated subcarrier channel set in the receipt confirmation period. However, when stations of the first through n^{th} stations 12 through 16 do not successfully receive data transmitted from the access point 10, they do not activate the allocated subcarrier channel set in the receipt confirmation period. The terminal, which does not activate the allocated subcarrier channel set in the receipt confirmation period, analyze whether they can successfully receive data to be retransmitted from the access point 10, and determine whether it will activate the subcarrier channel set in the receiving state period according to the result of analysis. That is, when the station among the first through n^{th} stations 12 through 16 lies in the state of successfully receiving the data to be retransmitted from the access point 10, the station activates the allocated subcarrier channel set in the receiving state period. However, if the station among the first through n^{th} stations 12 through 16 lies in the state of not being capable of successfully receiving the data to be retransmitted from the access point 10, the station maintains deactivated the allocated subcarrier channel set in the receiving state period.

For instance, when a station is out of a service area of the access point 10 or the power of the station is turned off, the station determines that it lies in a state where the station cannot successfully receive data to be retransmitted from the access point, and then, maintains deactivating the subcarrier channel set in the receiving state period. In contrast, when a station generates an error during demodulation of packets, or senses a signal with a level equal to or greater than a reference level but do not successfully receive data from the access point 10, the station determines that it lies in a state where the station can successfully receive data to be retransmitted from the access point 10, and then, activates the allocated subcarrier channel set in the receiving state period. The error during demodulation of packets may be a Cyclic Redundancy Check (CRC) error.

On each of the first through n^{th} stations 12 through 16, the access point 10 checks whether subcarrier channels belonging to the subcarrier channel set, which is allocated for the receipt confirmation period and the receiving state period, are activated. Next, according to the result of checking, the access point 10 transmits new data in a next frame to each station or retransmits data, which was transmitted in the previous frame, in the next frame to each station. The access point 10 may operate according to the state of the subcarrier channel set in the receipt confirmation period and/or the receiving state period, as shown in Table 1.

**[Table 1]**

| ACK | STA | Operation of Access Point |
|---|---|---|
| 1 | X | The access point 10 perceives that a station successfully receives packets, and thus, retransmission of data is not necessary. |
| 0 | 1 | The access point 10 perceives that the station did not successfully receive the packets but it can successfully receive data to be transmitted again. |
| 0 | 0 | The access point 10 perceives that the station did not successfully receive the packets and cannot receive data to be transmitted again. |

In Table 1, ACK denotes the receipt confirmation period, STA denotes the receiving state period, '0' denotes a state where the subcarrier channel set is deactivated, '1' denotes a state where the subcarrier channel set is activated, and X denotes a state where the subcarrier channel set can be activated or deactivated.

Referring to Table 1, when the receipt confirmation period *ACK* and the receiving state period *STA* correspond to the states 1 and X, respectively, the access point 10 transmits new data in the next frame to the station. When the receipt confirmation period *ACK* and the receiving state period *STA* correspond to the states '0' and '1', respectively, the access point 10 retransmits the previous data in the next frame to the station. When the receipt confirmation period ACK and the receiving state period *STA* correspond to the state '0', the access point 10 does not transmit data in the next frame to the station.

In the mean time, a subcarrier channel of the subcarrier channel set activated in the receipt confirmation period *ACK* or the receiving state period *STA* may be lost in a wireless communications network due to multi-path fading. Accordingly, the access point 10 may allocate not one subcarrier channel but a plurality of subcarrier channels, as a subcarrier channel set, to each station to cope with problems when the subcarrier channel of the subcarrier channel set, which are used for the receipt confirmation period *ACK* and the receiving state period *STA*, are lost during wireless interface. For instance, when each station is allocated with three subcarrier channels as a subcarrier channel set to be used in the receipt confirmation period *ACK*, the access point 10 considers each station as successfully receiving data even if at least one of the three subcarrier channels is activated. Similarly, when each station is allocated with three subcarrier channels as a subcarrier channel set to be used in the receiving state period *STA*, the access point 10 considers that each station can successfully receive data to be transmitted again even if at least one of the three subcarrier channels is activated.

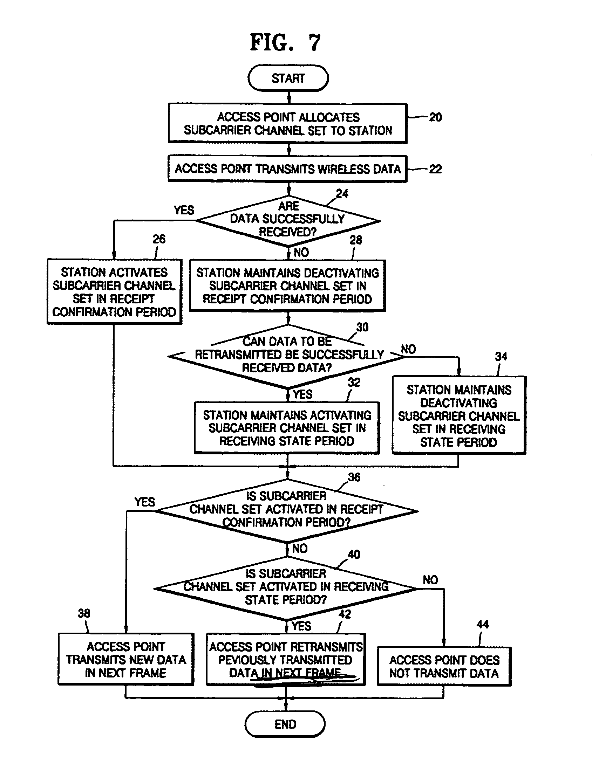

FIG. 7 is a flowchart illustrating a wireless data communications method according to an embodiment of the present invention. Referring to FIG. 7, an access point allocates a subcarrier channel set and transmits data (operations 20 and 22). Next, the access point determines whether the allocated subcarrier channel set is activated in the receipt confirmation period ACK and the receiving state period STA (operations 24 through 34). Next, the access point operates according as whether the subcarrier channel set is activated (operations 36 through 44).

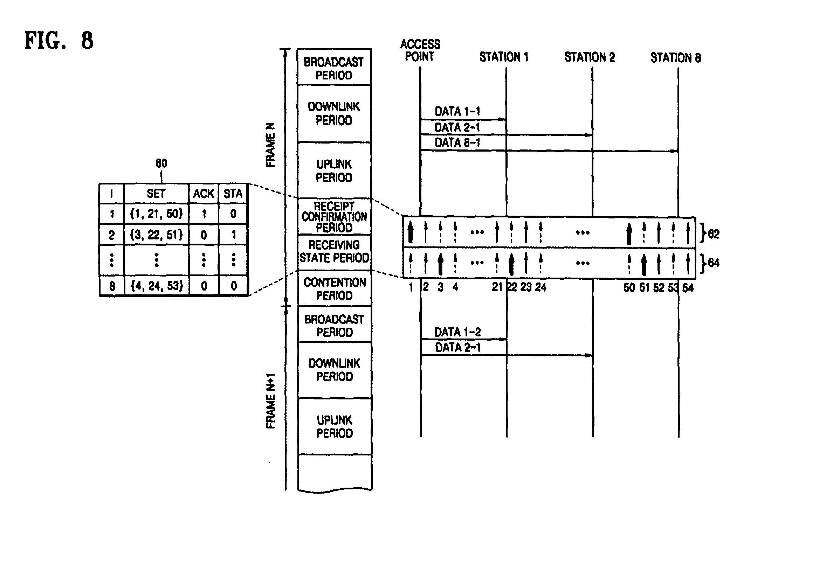

FIG. 8 is a diagram illustrating a process of sending data to each station, according to an embodiment of the present invention, by the wireless data communication method of FIG. 7. In FIG. 8, reference numerals 62 and 64 denote the symbols shown in FIG. 5. In the symbols 62 and 64, dotted lines represent deactivated subcarrier channel and bold solid lines represent activated subcarrier channel.

In the process of FIG. 8, it is assumed that wireless data communications is WLAN communications, the number of stations that can access the access point via a network is eight (n=8), and a first station STATION1, a second station STATION2, and an eighth station STATION8 are connected to the access point. Referring to a mapping table 60 of FIG. 8, first, twenty-first, and fiftieth subcarrier channels are allocated as a subcarrier channel set SET for the first station (i=1). Third, twenty-second, and fifty-first subcarrier channels are allocated as a subcarrier channel set SET for the third station (i=3). Fourth, twenty-fourth, and fifty-third subcarrier channels are allocated as a subcarrier channel set SET for the eighth station (i=8).

A wireless data communications method according to the present invention will now be described in greater detail with reference to FIGS. 7 and 8.

First, the access point 10 allocates a subcarrier channel set, which is to be used in the receipt confirmation period and the receiving state period, to each of stations that request access to the access point via a network (operation 20). At this time, the access point 10 may allocate a plurality of subcarrier channels as the subcarrier channel set of each station, for a case where parts of the subcarrier channels are lost in the receipt confirmation period.

Next, the access point 10 transmits wireless data to the stations connected via the network in a downlink period of a frame (operation 22). Referring to FIG. 8, the access point 10 transmits wireless data *DATA 1-1, DATA 2-1*,and *DATA 8-1* to the first through eighth stations via a downlink period of a frame *N*. Then, each of the first through eighth stations extracts and receives the corresponding wireless data only among wireless data *DATA 1-1, DATA 2-1,* and *DATA 8-1* transmitted from the access point, respectively.

The stations connected to the access point 10 via the network determine whether they successfully receive the data from the access point (operation 24). The station, which successfully receives the data, activates the subcarrier channel set allocated in operation 20 in a receipt confirmation period of the frame N (operation 26). In contrast, the station, which does not successfully receive the data transmitted from the access point 10, maintains deactivating the subcarrier channel set allocated in operation 20 in the receipt confirmation period of the frame N (operation 28). Referring to FIG. 8, the first station successfully receives data *DATA 1-1* transmitted from the access point 10. However, the second and eighth stations do not receive the data *DATA 2-1* and *DATA 8-1* transmitted from the access point, respectively, since the data *DATA 2-1* and *DATA 8-1* were lost during data transmission. Therefore, the first station activates the first, twenty-first, and fiftieth subcarrier channels of the subcarrier channel set, which are allocated in operation 20, within the first symbol 62 in the receipt confirmation period of the frame N, i.e., the receipt confirmation period sets to the state 1 (ACK=1). However, the second station does not receive the data *DATA 2-1*, and thus maintains deactivating the third, twenty-second, and fifty-first subcarrier channels, which are allocated in operation 20, in the receipt confirmation period of the frame *N*, i.e., the receipt confirmation period sets to the state 0 (ACK=0). Likewise, the eighth station does not receive the data *DATA 8-1*, and thus maintains deactivating the fourth, twenty-fourth, and fifty-third subcarrier channels, which are allocated in operation 20, in the receipt confirmation period of the frame *N*, i.e., the receipt confirmation period ACK sets the state 0 (ACK=0).

The station that does not successfully receive the wireless data transmitted from the access point 10, i.e., it maintains deactivating the subcarrier channels in the receipt confirmation period, determines whether it can successfully receive the data to be transmitted again from the access point 10 (operation 30). For instance, the station determines whether it can successfully receive the data to be transmitted again from the access point by checking whether the station is out of a service region of the access point 10, the power of the station is turned off, an error occurs during demodulation of packets, or a signal with a level equal to or greater than a reference level is sensed.

If the station determines that it can successfully receive the data to be transmitted again from the access point 10, the station activates the subcarrier channel set in the receiving state period (operation 32). In this case, the receiving state period STA becomes the state 1. If the station determines that it cannot successfully receive the data to be transmitted again from the access point 10, the station maintains deactivating the subcarrier channel set in the receiving state period STA (operation 34). In this case, the receiving state period STA becomes the state 0. Referring to FIG. 8, since the second station determines that it can successfully receive data to be transmitted again from the access point 10, and the second station activates the third, twenty-second, and fifty-first subcarrier channels of the subcarrier channel set, which is allocated in operation 20, within the second symbol 64 in the receiving state period of the frame *N*, i.e., the receiving state period STA becomes the state 1 (operation 32). However, since the eighth station determines that it cannot successfully receive the data to be transmitted again from the access point 10, and the eighth station maintains deactivating the fourth, twenty-fourth, and fifty-third subcarrier channels of the subcarrier channel set, which is allocated in operation 20, within the second symbol 64 in the receiving state period of the frame *N*, i.e., the receiving state period STA sets to the state 0 (operation 34).

In the wireless data communication method of FIG. 7, operation 36 is performed after operation 26.

After operation 32 or 34, the access point 10 determines whether the subcarrier channel set is activated in the receipt confirmation period and the receiving state period of the frame *N* (operations 36 and 40). Specifically, the access point 10 determines whether the subcarrier channel set is activated in the receipt confirmation period ACK (operation 36). If it is determined that the subcarrier channel set is not activated in the receipt confirmation period ACK, the access point determines whether the subcarrier channel set is activated in the receiving state period STA (operation 40). If it is determined that the subcarrier channel set is activated in the receipt confirmation period ACK, the access point 10 transmits new data to the station, which activates the subcarrier channel set in the receipt confirmation period and transmits the activated subcarrier channel set in the first symbol 62 to the access point 10, via a downlink period of a next frame *N+1* (operation 38).

If it is determined that the subcarrier channel set is activated in the receiving state period STA, the access point 10 retransmits the data, which was transmitted in the downlink period of the frame *N* in operation 22, to the station which activates the subcarrier channel set in the receiving state period STA, in the downlink period of the next frame *N+1* (operation 42). However, when it is determined that the subcarrier channel set is not activated in the receiving state period STA, the access point 10 does not transmit data to the station that maintains deactivating the subcarrier channel set in the receiving state period STA (operation 44).

Referring to FIG. 8, the access point 10 determines whether the subcarrier channels in the first symbol 62 is activated in the receipt confirmation period of the frame *N* and whether the subcarrier channels in the second symbol 64 is activated in the receiving state period. Specifically, the access point 10 determines that the first and fiftieth subcarrier channels in the first symbol 62 are activated. The activated first and fiftieth subcarrier channels are subcarrier channels for the first station. Even if the twenty-first subcarrier channel allocated to the first station is lost in transmission, the access point 10 considers the first station as satisfactorily receiving the data *DATA 1-1* since at least one of the first, twenty-second, and the fiftieth subcarrier channels is activated. Accordingly, the access point 10 sends the first station new data *DATA 1-2* in the downlink period of the next frame *N+1.*

Also, the access point 10 perceives that all the third, twenty-second, and fifty-first subcarrier channels allocated to the second station, and all the fourth, twenty-fourth, and fifty-third subcarrier channels allocated to the eighth station are deactivated in the first symbol 62. In this case, the access point 10 considers that the second and eighth stations that have the deactivated subcarrier channels did not successfully receive the wireless data. Thus, the access point 10 checks whether the subcarrier channels allocated to the second and eighth stations are turned to be activated or remain to be deactivated in the second symbol 64. Since all the third, twenty-second, and the fifty-first subcarrier channels allocated to the second station are activated in the receiving state period STA, the access point 10 sends the data *DATA 2-1*, which was transmitted in the frame *N* to the second station, in the downlink period of the next frame *N+1* to the second station again. However, since all the fourth, twenty-fourth, and fifty-third subcarrier channels allocated to the eighth station are deactivated in the receiving state period STA, the access point 10 transmits neither the data DATA 8-1, which was transmitted in the frame *N* to the eighth station, nor new data *DATA 8-2* to the eighth station in the downlink period of the next frame *N+1*.

The present invention can be embodied as a computer readable code in a computer readable recording medium. Here, the computer readable recording medium may be any recording apparatus capable of storing data that can be read by a computer system. For example, the computer readable recording medium may be a read-only memory (ROM), a random access memory (RAM), a compact disc (CD)-ROM, a magnetic tape, a floppy disk, an optical data storage device, and so on. Also, the computer readable recording medium may be implemented in the pattern of a carrier wave that transmits data via the Internet, for example. The computer readable recording medium can be distributed among computer systems that are interconnected through a network, and the present invention may be stored and implemented as a computer readable code in the distributed system.

As described above, in a wireless data communication apparatus and method according to the present invention, an access point can determine not only whether a station receives data transmitted from the access point, but also the state of a station, which does not receive the data, by checking whether a subcarrier channel set is allocated in a receiving state period of the frame in the same as a frame that was used to transmit the data to the station. Next, the access point transmits new data to the station or retransmits the previous data to the station according to the result of determination. Accordingly, it is possible to prevent data from being sent again to station that cannot receive data since it is out of a service area of the access point, for example, and exclude the station from the stations that will receive services from the access point, thereby minimizing consumption of resources and effectively using the resources. Also, it is possible to immediately determine whether a station is out of the service area of the access point through the receiving state period.

While this invention has been particularly shown and described with reference to exemplary embodiments thereof, it will be understood by those skilled in the art that various changes in form and details may be made therein without departing from the scope of the invention as defined by the appended claims.

## Claims

1. A wireless data communication apparatus arranged to perform wireless data communications between an access point (10) and at least one station (12, 14, 16), wherein the wireless data communication apparatus is arranged to perform the wireless data communications using a wireless transmission frame which includes an uplink period, a contention period, a receipt confirmation period, and a receiving state period,
wherein the receipt confirmation period is a period in which a subcarrier channel set is activated by the station if the station successfully receives data from the access point, and
wherein the receiving state period is a period in which the subcarrier channel set is activated by the station if the station is in a state in which it can successfully receive data that will be retransmitted by the access point.

2. The wireless data communication apparatus of claim 1, wherein the receipt confirmation period and the receiving state period have at least two symbols,
wherein one of the two symbols is used in the receipt confirmation period, and the other symbol is used in the receiving state period.

3. A wireless data communication system arranged to perform wireless data communications using a wireless transmission frame which includes an uplink period, a contention period, a receipt confirmation period, and a receiving state period, the wireless data communication system comprising:
an access point (10) arranged to allocate a subcarrier channel set to be used in the receipt confirmation period and the receiving state period, and to transmit data to a station which requests access to the access point, and
the at least one station (12, 14, 16) arranged to request access to the access point and being allocated with the subcarrier channel set by the access point, wherein the station is arranged to activate the subcarrier channel set in the receipt confirmation period responsive to the station successfully receiving the data transmitted from the access point; and arranged to activate the subcarrier channel set in the receiving state period responsive to determining that the station is in a state in which it can receive data that will be retransmitted by the access point,
wherein the access point is arranged to transmit new data in a next frame to the station responsive to the station activating the channel set in the receipt confirmation period, whereas it is arranged to retransmit previously transmitted data responsive to the station maintaining the channel set deactivated in the receipt confirmation period and activating it in the receiving state period.

4. The wireless data communication system of claim 3, wherein the station is arranged to activate the subcarrier channel set in the receiving state period responsive to an error occuring during demodulation of packets.

5. The wireless data communication system of claim 3, wherein the station is arranged to activate the subcarrier channel set in the receiving state period responsive to the station sensing a signal with a level equal to or greater than a reference level.

6. A wireless data communication method performed between an access point and at least one station using a wireless transmission frame which includes a downlink period, an uplink period, a receipt confirmation period, a receiving state period, and a contention period, the wireless data communication method comprising:
(a) allocating (20), at the access point, a subcarrier channel set to a station which requests access to the access point, and transmitting (22) wireless data to stations accessing the access point in the downlink period, the subcarrier channel set being used in the receipt confirmation period and the receiving state period;
(b) maintaining (28), at the station, the subcarrier channel set allocated in (a) deactivated in the receipt confirmation period upon determining that the station does not successfully receive the transmitted data;
(c) determining (30), at the station, upon determining that the station does not successfully receive the transmitted data, whether the station is in a state in which it can successfully receive data that will be retransmitted by the access point;
(d) activating (32), at the station, the subcarrier channel set in the receiving state period upon determining that the station is in a state in which it can successfully receive the data that will be retransmitted by the access point ; and
(e) determining (36, 40), at the access point, whether the subcarrier channel set is activated in the receipt confirmation period and the receiving state period.

7. The wireless data communication method of claim 6, further comprising:
(f) determining (24), after (a), at each of the stations accessing the access point via the network, whether the data transmitted from the access point to each station are successfully received; and
(g) activating (26), at the station which successfully receives the data, the subcarrier channel set allocated in (a) in the receipt confirmation period, and proceeding to (e).

8. The wireless data communication method of claim 6, further comprising:
transmitting (38), at the access point, new data to the station, which activates the subcarrier channel set in the receipt confirmation period, in a downlink period of a next frame; and
retransmitting (42), at the access point, the data, which has been transmitted in (a), to the station, which activates the subcarrier channel set in the receiving state period, in the downlink period of the next frame.

9. The wireless data communication method of claim 8, further comprising the access point not transmitting (44) the data to the station maintaining (34) the subcarrier channel set in the receiving state period deactivated.

## Patentansprüche

1. Drahtlos-Datenübertragungsvorrichtung, die so eingerichtet ist, dass sie Drahtlos-Datenübertragungsvorgänge zwischen einem Zugangspunkt (10) und wenigstens einer Station (12, 14, 16) durchführt, wobei die Drahtlos-Datenübertragungsvorrichtung so eingerichtet ist, dass sie die Drahtlos-Datenübertragungsvorgänge unter Verwendungen eines Drahtlos-Senderahmens durchführt, der eine Uplink-Periode, eine Kollisions-Periode (contention period), eine Empfangsbestätigungs-Periode und eine Empfangszustands-Periode enthält,
wobei die Empfangsbestätigungs-Periode eine Periode ist, in der ein Hilfsträger-Kanalsatz (subcarrier channel set) durch die Station aktiviert wird, wenn die Station erfolgreich Daten von dem Zugangspunkt empfängt, und
wobei die Empfangszustands-Periode eine Periode ist, in der der Hilfsträger-Kanalsatz durch die Station aktiviert wird, wenn sich die Station in einem Zustand befindet, in dem sie erfolgreich Daten empfangen kann, die von dem Zugangspunkt erneut gesendet werden.

2. Drahtlos-Datenübertragungsvorrichtung nach Anspruch 1, wobei die Empfangsbestätigungs-Periode und die Empfangszustands-Periode über wenigstens zwei Symbole verfügen,
wobei eines der zwei Symbole in der Empfangsbestätigungs-Periode verwendet wird und das andere Symbol in der Empfangszustands-Periode verwendet wird.

3. Drahtlos-Datenübertragungssystem, das so eingerichtet ist, dass es Drahtlos-Datenübertragungsvorgänge unter Verwendungen eines Drahtlos-Senderahmens durchführt, der eine Uplink-Periode, eine Kollisions-Periode, eine Empfangsbestätigungs-Periode und eine Empfangszustands-Periode enthält, wobei das Drahtlos-Datenübertragungssystem umfasst:
einen Zugangspunkt (10), der so eingerichtet ist, dass er einen Hilfsträger-Kanalsatz zuweist, der in der Empfangsbestätigungs-Periode und der Empfangszustands-Periode zu verwenden ist, und Daten zu einer Station sendet, die Zugang zu dem Zugangspunkt anfordert, und
die wenigstens eine Station (12, 14, 16), die so eingerichtet ist, dass sie Zugang zu dem Zugangspunkt anfordert und ihr durch den Zugangspunkt der Hilfsträger-Kanalsatz zugewiesen wird, wobei die Station so eingerichtet ist, dass sie den Hilfsträger-Kanalsatz in der Empfangsbestätigungs-Periode in Reaktion darauf aktiviert, dass die Station erfolgreich die von dem Zugangspunkt gesendeten Daten empfängt, und so eingerichtet ist, dass sie den Hilfsträger-Kanalsatz in der Empfangszustands-Periode
in Reaktion darauf aktiviert, dass festgestellt wird, dass sich die Station in einem Zustand befindet, in dem sie Daten empfangen kann, die von dem Zugangspunkt erneut gesendet werden,
wobei der Zugangspunkt so eingerichtet ist, dass er neue Daten in einem nächsten Rahmen in Reaktion darauf, dass die Station den Kanalsatz in der Empfangsbestätigungs-Periode aktiviert, zu der Station sendet, während er so eingerichtet ist, dass er zuvor gesendete Daten in Reaktion darauf, dass die Station den Kanalsatz in der Empfangsbestätigung-Periode deaktiviert hält und ihn in der Empfangszustands-Periode aktiviert, erneut sendet.

4. Drahtlos-Datenübertragungssystem nach Anspruch 3, wobei die Station so eingerichtet ist, dass sie den Hilfsträger-Kanalsatz in der Empfangszustands-Periode in Reaktion auf einen Fehler, der während der Demodulation von Paketen auftritt, aktiviert.

5. Drahtlos-Datenübertragungssystem nach Anspruch 3, wobei die Station so eingerichtet ist, dass sie den Hilfsträger-Kanalsatz in der Empfangszustands-Periode in Reaktion darauf aktiviert, dass die Station ein Signal mit einem Pegel erfasst, der auf oder über einem Bezugspegel liegt.

6. Drahtlos-Datenübertragungsverfahren, das zwischen einem Zugangspunkt und wenigstens einer Station unter Verwendung eines Drahtlos-Senderahmens durchgeführt wird, der eine Downlink-Periode, eine Uplink-Periode, eine Empfangsbestätigungs-Periode, eine Empfangszustands-Periode und eine Kollisions-Periode enthält, wobei das Drahtlos-Datenübertragungsverfahren umfasst:
(a) Zuweisen (20) eines Hilfsträger-Kanalsatzes zu einer Station, die Zugang zu dem Zugangspunkt anfordert, an dem Zugangspunkt und Senden (22) von Drahtlos-Daten zu Stationen, die Zugang zu dem Zugangspunkt haben, in der Downlink-Periode, wobei der Hilfsträger-Kanalsatz in der Empfangsbestätigungs-Periode und der Empfangszustands-Periode verwendet wird;
(b) Halten (28) des in (a) zugewiesenen Hilfsträger-Kanalsatzes in deaktiviertem Zustand in der Empfangsbestätigungs-Periode an der Station, wenn festgestellt wird, dass die Station die gesendeten Daten nicht erfolgreich empfängt;
(c) wenn festgestellt wird, dass die Station die gesendeten Daten nicht erfolgreich empfängt, Feststellen (30) an der Station, ob sich die Station in einem Zustand befindet, in dem sie erfolgreich Daten empfangen kann, die von dem Zugangspunkt erneut gesendet werden;
(d) Aktivieren (32) des Hilfsträger-Kanalsatzes in der Empfangszustands-Periode an der Station, wenn festgestellt wird, dass sich die Station in einem Zustand befindet, in dem sie erfolgreich die Daten empfangen kann, die von dem Zugangspunkt erneut gesendet werden; und
(e) in der Empfangsbestätigungs-Periode und der Empfangszustands-Periode Feststellen (36, 40) an dem Zugangspunkt, ob der Hilfsträger-Kanalsatz aktiviert ist.

7. Drahtlos-Datenübertragungsverfahren nach Anspruch 6, das des Weiteren umfasst:
(f) nach (a) Feststellen (24) an jeder der Stationen, die über das Netzwerk Zugang zu dem Zugangspunkt haben, ob die von dem Zugangspunkt zu jeder der Stationen gesendete Daten erfolgreich empfangen werden; und
(g) Aktivieren (26) an der Station, die die Daten erfolgreich empfängt, des in (a) zugewiesenen Hilfsträger-Kanalsatzes in der Empfangsbestätigungs-Periode und Übergehen zu (e).

8. Drahtlos-Datenübertragungsverfahren nach Anspruch 6, das des Weiteren umfasst:
Senden (38) neuer Daten an dem Zugangspunkt zu der Station, die den Hilfsträger-Kanalsatz in der Empfangsbestätigungs-Periode aktiviert, in einer Downlink-Periode eines nächsten Rahmens; und
erneutes Senden (42) der Daten, die in (a) gesendet worden sind, an dem Zugangspunkt zu der Station, die den Hilfsträger-Kanalsatz in der Empfangszustands-Periode aktiviert, in der Downlink-Periode des nächsten Rahmens.

9. Drahtlos-Datenübertragungsverfahren nach Anspruch 8, das des Weiteren umfasst, dass der Zugangspunkt die Daten nicht zu der Station sendet (44), die den Hilfsträger-Kanalsatz in der Empfangszustands-Periode deaktiviert hält (34).

## Revendications

1. Dispositif de communication de données sans fil agencé pour effectuer des communications de données sans fil entre un point d'accès (10) et au moins une station (12, 14, 16), le dispositif de communication de données sans fil étant agencé pour effectuer les communications de données sans fil en utilisant une trame de transmission sans fil qui comporte une période en liaison montante, une période de collision, une période de confirmation de réception, et une période d'état de réception,
dans lequel la période de confirmation de réception est une période dans laquelle un ensemble de canaux de sous-porteuse est activé par la station si la station reçoit avec succès des données du point d'accès, et
dans lequel la période d'état de réception est une période dans laquelle l'ensemble de canaux de sous-porteuse est activé par la station si la station est dans un état dans lequel elle est en mesure de recevoir avec succès des données qui seront retransmises par le point d'accès.

2. Dispositif de communication de données sans fil selon la revendication 1, dans lequel la période de confirmation de réception et la période d'état de réception ont au moins deux symboles,
dans lequel l'un des deux symboles est utilisé dans la période de confirmation de réception, et l'autre symbole est utilisé dans la période d'état de réception.

3. Système de communication de données sans fil agencé pour exécuter des communications de données sans fil en utilisant une trame de transmission sans fil qui inclut une période en liaison montante, une période de collision, une période de confirmation de réception, et une période d'état de réception, le système de communication de données sans fil comportant :
un point d'accès (10) agencé pour affecter un ensemble de canaux de sous-porteuse à utiliser dans la période de confirmation de réception et dans la période d'état de réception, et transmettre des données à une station qui demande un accès au point d'accès, et
ladite au moins une station (12, 14, 16) agencée pour demander un accès au point d'accès et étant affectée avec l'ensemble de canaux de sous-porteuse par le point d'accès, la station étant agencée pour activer l'ensemble de canaux de sous-porteuse dans la période de confirmation de réception en réponse au fait que la station reçoive avec succès les données transmises depuis le point d'accès, et agencée pour activer l'ensemble de canaux de sous-porteuse dans la période d'état de réception en réponse à une détermination que la station est dans un état dans lequel elle est en mesure de recevoir des données qui seront retransmises par le point d'accès,
dans lequel le point d'accès est agencé pour transmettre de nouvelles données dans une trame successive à la station en réponse au fait que la station active l'ensemble de canaux dans la période de confirmation de réception, alors qu'il est agencé pour retransmettre des données transmises précédemment en réponse au fait que la station maintienne l'ensemble de canaux désactivé dans la période de confirmation de réception et l'active dans la période d'état de réception.

4. Système de communication de données sans fil selon la revendication 3, dans lequel la station est agencée pour activer l'ensemble de canaux de sous-porteuse dans la période d'état de réception en réponse à une erreur rencontrée au cours d'une démodulation de paquets.

5. Système de communication de données sans fil selon la revendication 3, dans lequel la station est agencée pour activer l'ensemble de canaux de sous-porteuse dans la période d'état de réception en réponse au fait que la station détecte un signal dont le niveau est égal ou supérieur à un niveau de référence.

6. Procédé de communication de données sans fil exécuté entre un point d'accès et au moins une station en utilisant une trame de transmission sans fil qui inclut une période en liaison descendante, une période en liaison montante, une période de confirmation de réception, une période d'état de réception, et une période de collision, le procédé de communication de données sans fil comportant les étapes consistant à :
(a) affecter (20), au point d'accès, un ensemble de canaux de sous-porteuse à une station qui demande un accès au point d'accès, et transmettre (22) des données sans fil à des stations accédant au point d'accès dans la période en liaison descendante, l'ensemble de canaux de sous-porteuse étant utilisé dans la période de confirmation de réception et dans la période d'état de réception ;
(b) maintenir (28), à la station, l'ensemble de canaux de sous-porteuse affecté à l'étape (a), désactivé dans la période de confirmation de réception suite à une détermination que la station n'a pas reçu avec succès les données transmises ;
(c) déterminer (30), à la station, après avoir déterminé que la station n'a pas reçu avec succès les données transmises, si la station est dans un état dans lequel elle est en mesure de recevoir avec succès des données qui seront retransmises par le point d'accès ;
(d) activer (32), à la station, l'ensemble de canaux de sous-porteuse dans la période d'état de réception après avoir déterminé que la station est dans un état dans lequel elle est en mesure de recevoir avec succès les données qui seront retransmises par le point d'accès ; et
(e) déterminer (36, 40), au point d'accès, si l'ensemble de canaux de sous-porteuse est activé dans la période de confirmation de réception et dans la période d'état de réception.

7. Procédé de communication de données sans fil selon la revendication 6, comportant en outre les étapes consistant à :
(f) déterminer (24), après l'étape (a), à chacune des stations accédant au point d'accès via le réseau, si les données transmises depuis le point d'accès à chaque station sont reçues avec succès ; et
(g) activer (26), à la station qui reçoit avec succès les données, l'ensemble de canaux de sous-porteuse affecté à l'étape (a) dans la période de confirmation de réception, et passer à l'étape (e).

8. Procédé de communication de données sans fil selon la revendication 6, comportant en outre les étapes consistant à :
transmettre (38), au niveau du point d'accès, de nouvelles données à la station, qui active l'ensemble de canaux de sous-porteuse dans la période de confirmation de réception, dans une période en liaison descendante d'une trame successive ; et
retransmettre (42), au niveau du point d'accès, les données qui ont été transmises à l'étape (a) à la station, qui active l'ensemble de canaux de sous-porteuse dans la période d'état de réception, dans la période en liaison descendante de la trame successive.

9. Procédé de communication de données sans fil selon la revendication 8, comportant en outre l'étape dans laquelle le point d'accès ne transmet pas (44) les données à la station maintenant désactivé (34) l'ensemble de canaux de sous-porteuse désactivé dans la période d'état de réception.
